# EUROPÄISCHE PATENTSCHRIFT

(11) **EP 0 490 869 B1**
(45) Veröffentlichungstag und Bekanntmachung des Hinweises auf die Patenterteilung: **22.06.1994**
(21) Anmeldenummer: 91890289.1
(22) Anmeldetag: 19.11.1991
(51) Int. Cl.: H05B 7/156, F27B 3/08, F27B 3/28, G05B 5/01, G05F 1/02

(54) **Regelkreis zur Impedanzregelung eines Lichtbogenofens**
Regulating circuit for the impedance regulation of an arc furnace
Circuit de réglage pour la régulation de l'impédance d'un four à arc

(30) Priorität: 07.12.1990 AT 2477/90
(43) Veröffentlichungstag der Anmeldung: 17.06.1992
(73) Patentinhaber: VOEST-ALPINE INDUSTRIEANLAGENBAU GMBH, 4020 Linz (AT)
(72) Erfinder: Aberl, Heinrich, Dipl.-Ing., A-4040 Linz (AT); Rubenzucker, Franz, Ing., A-4050 Traun (AT)
(74) Vertreter: Hübscher, Heiner, Dipl.-Ing.

(56) Entgegenhaltungen:
- DE-A- 3 242 934
- DE-B- 2 731 014
- DE-B- 2 841 857
- DE-C- 2 948 787

## Beschreibung

Die Erfindung bezieht sich auf einen Regelkreis zur Impedanzregelung eines Lichtbogenofens mit wenigstens einer Elektrode, einem über ein Steuerventil beaufschlagbaren, hydraulischen Hubtrieb für die Elektrode, einem an einem Stelltrieb für das Steuerventil angeschlossenen Regler, dem eingangsseitig ein Istwertgeber für die Impedanz und eine Eingabe für den Impedanz-Sollwert zugeordnet sind, und mit einer Korrekturstufe für die Reglerverstärkung.

Da sich bei einem an einen Transformator angeschlossenen Lichtbogenofen mit der Länge des Lichtbogens zwischen einer Ofenelektrode und dem Schmelzgut die auf der Sekundärseite des Transformators abgreifbaren Phasenspannungen und -ströme ändern und das Verhältnis dieser Größen durch die jeweilige Impedanz bestimmt wird, kann über die Impedanz als Regelgröße die Lichtbogenlänge durch eine entsprechende Elektrodenverstellung über einen Hubtrieb geregelt werden. Zu diesem Zweck ist es bekannt (DE-PS 29 48 787), aus den Istwerten der gemessenen Phasenspannungen und -ströme den Istwert der Impedanz rechnerisch zu ermitteln und mit einem vorgegebenen Impedanz-Sollwert zu vergleichen, um beim Auftreten einer Soll-Istwertdifferenz den Hubtrieb für die jeweilige Elektrode über einen Regler mit einer entsprechenden Stellgröße zum Ausgleich der Soll-Istwertdifferenz anzusteuern. Dabei kann es zu einer elektrischen und mechanischen Schwingungsanregung der in Tragarmen gehaltenen Elektroden kommen, was im Falle einer Schwingungsanregung im Bereich einer Resonanzfrequenz des durch die Elektroden und ihre Tragarme gebildeten, schwingungsfähigen Systems zu einer mechanischen Überlastung der Elektroden führen kann.

Um auf Stromschwankungen zurückzuführende Schwingungen der Elektroden und ihrer Tragarme zumindest auf ein zulässiges Maß herabsetzen zu können, wurde bereits vorgeschlagen (DE-OS 28 41 857), die Reglerverstärkung in Abhängigkeit von der Größe gegebenenfalls auftretender Schwingungen der Regelgröße, also der aus Phasenspannung und -strom errechneten Impedanz, zu verringern, so daß über die dann deutlich herabgesetzte Reglerverstärkung Schwingungen der Regelgröße nur gedämpft auf die Stellgröße durchgreifen können. Trotz dieser Maßnahme kann es jedoch immer wieder zu unzulässigen Elektrodenschwingungen kommen, insbesondere bei unterschiedlichen Betriebsbedingungen.

Der Erfindung liegt somit die Aufgabe zugrunde, einen Regelkreis zur Impedanzregelung eines Lichtbogenofens der eingangs geschilderten Art mit vergleichsweise einfachen Mitteln so auszugestalten, daß selbst bei unterschiedlichen Betriebsbedingungen unzulässige Elektrodenschwingungen sicher unterdrückt werden können.

Die Erfindung löst die gestellte Aufgabe dadurch, daß die Korrekturstufe für die Reglerverstärkung über einen Geber für die Regelstreckenverstärkung im Sinne einer zur Änderung der Streckenverstärkung gegensinnigen Änderung der Reglerverstärkung betätigbar ist.

Die Erfindung beruht auf der Erkenntnis, daß die für das dynamische Verhalten des Regelkreises mitentscheidende Abhängigkeit der Größe der Impedanz von der Lichtbogenlänge nichtlinear ist, so daß das dynamische Verhalten des Regelkreises nur dann von der jeweiligen Lichtbogenlänge und damit vom jeweiligen Arbeitspunkt unabhängig wird, wenn die Reglerverstärkung in Abhängigkeit von der jeweiligen Regelstreckenverstärkung korrigiert wird, die ja durch die auf die Änderung der Lichtbogenlänge bezogene Impedanzänderung bestimmt wird und sich zufolge der nichtlinearen Abhängigkeit der Impedanz von der Lichtbogenlänge mit der Lichtbogenlänge ändert. Durch eine zumindest angenähert konstant gehaltene Gesamtverstärkung des Regelkreises können somit Schwankungen im Bereich des dynamischen Verhaltens des Regelkreises ausgeschlossen und darauf zurückgehende Schwingungen unterbunden werden. Zu diesem Zweck wird die Regelstreckenverstärkung aus der Impedanz unter Berücksichtigung der elektrischen Widerstandswerte des Leitungssystems nach bekannten Formeln errechnet, um in Abhängigkeit von der errechneten Streckenverstärkung die Reglerverstärkung über eine Korrekturstufe im Sinne eines Konstanthaltens der Gesamtverstärkung des Regelkreises zu beeinflussen. Kann davon ausgegangen werden, daß in der unmittelbaren Umgebung des jeweiligen Arbeitspunktes weitgehend lineare Zusammenhänge zwischen Impedanz und Lichtbogenlänge bestehen, was im allgemeinen der Fall ist, so ist eine Istwerterfassung der Impedanz für den Geber der Regelstreckenverstärkung unter der Voraussetzung nicht erforderlich, daß die Impedanz entsprechend geregelt wird, und es kann der jeweilige Impedanzsollwert der Berechnung der Regelstreckenverstärkung zugrundegelegt werden.

Besonders günstige Verhältnisse bezüglich der Schwingungsunterdrückung können in weiterer Ausbildung der Erfindung dadurch erhalten werden, daß der Regler zur Störgrößenbeaufschlagung an einen Geber für die hydraulischen Druckschwingungen im Hubtrieb angeschlossen ist. Durch diese Störgrößenbeaufschlagung können allenfalls auftretende Schwingungen im Bereich des hydraulischen Hubtriebes auf kurzem Wege ausgeregelt werden, weil diese Schwingungen über den Beaufschlagungsdruck des Hubtriebes erfaßt und zu einer entsprechenden Gegensteuerung des Steuerventiles für die Druckbeaufschlagung des Hubtriebes ausgenützt werden können. In diesem Zusammenhang ist zu bedenken, daß die Eigenfrequenzen des schwingungsfähigen Systems aus Elektrode und Tragarm niederfrequent sind. Es empfiehlt sich daher auch, dem Geber für die hydraulischen Druckschwingungen ein auf die Eigenfrequenz der in einem Tragarm gehaltenen Elektrode abgestimmtes Schwingungsfilter zuzuordnen, so daß Druckschwingungen im Bereich dieser Eigenfrequenzen bevorzugt ausgeregelt werden können.

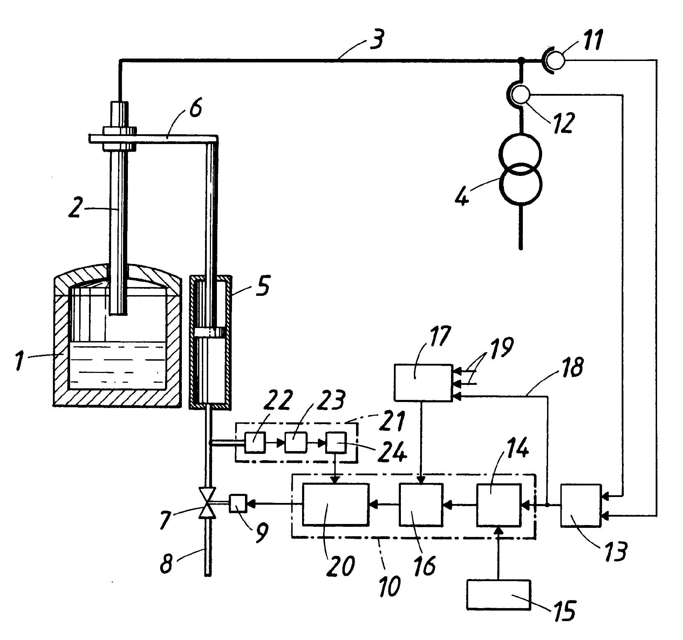

In der Zeichnung ist der Erfindungsgegenstand beispielsweise dargestellt, und zwar wird ein erfindungsgemäßer Regelkreis zur Impedanzregelung eines Lichtbogenofens in einem schematischen Blockschaltbild gezeigt.

Wegen der vereinfachten, einphasigen Darstellung der üblicherweise dreiphasigen elektrischen Energieversorgung des Lichtbogenofens 1 ist lediglich eine Elektrode 2 gezeigt, die über eine elektrische Leitung 3 an die Sekundärseite eines Transformators 4 angeschlossen ist und über einen hydraulischen Hubtrieb 5 der Höhe nach verstellt werden kann, der in herkömmlicher Weise als Stellzylinder ausgebildet ist. Dieser Stellzylinder, der an einem die Elektrode 2 haltenden Tragarm 6 angreift, wird mit Hilfe eines Steuerventiles 7 beaufschlagt, das in einer hydraulischen Beaufschlagungsleitung 8 für den Stellzylinder vorgesehen ist. Der Stelltrieb 9 dieses Steuerventiles 7 wird von einem Regler 10 in Abhängigkeit von der jeweiligen Impedanz des elektrischen Systems angesteuert. Zu diesem Zweck werden die Phasenspannung und der Phasenstrom auf der Sekundärseite des Transformators 4 über einen Spannungswandler 11 bzw. einen Stromwandler 12 abgegriffen und einem Istwertgeber 13 für die Impedanz zugeführt, der die Impedanz durch eine Division der Istwerte der Phasenspannung und des Phasenstromes errechnet. Der errechnete Impedanzistwert wird in einem Differenzbildner 14 mit dem über eine Eingabe 15 in den Regler 10 eingelesenen Impedanzsollwert zur Bildung der für die Stellgröße maßgebenden Soll-Istwertdifferenz verrechnet. Im Gegensatz zu herkömmlichen Reglern wird die Soll-Istwertdifferenz nicht unmittelbar zur Ausregelung der Abweichung der Regelgröße herangezogen, sondern einer Korrekturstufe 16 zugeführt, die die Soll-Istwertdifferenz in Abhängigkeit von der Regelstreckenverstärkung im Sinne eines Konstanthaltens der Gesamtverstärkung des Regelkreises korrigiert. Aus diesem Grunde wird die Korrekturstufe an einen Geber 17 für die Regelstreckenverstärkung angeschlossen, die im Falle des dargestellten Ausführungsbeispiels aus dem Istwert der Impedanz unter Berücksichtigung des Ohmschen und induktiven Widerstandes der elektrischen Leitung 3 aufgrund bekannter physikalischer Zusammenhänge errechnet wird. Die Istwerte der Impedanz werden dem Geber 17 vom Istwertgeber 13 für die Impedanz über eine Zweigleitung 18 zugeführt. Die Vorgabe der Widerstandswerte, die aufgrund der gegebenen Leitungsanordnung gemessen oder gerechnet werden und als Konstante anzusehen sind, erfolgt über entsprechende Eingabeeingänge 19.

Da die Regelstreckenverstärkung durch das Verhältnis der Impedanz zur Lichtbogenlänge bestimmt wird und die Abhängigkeit der Impedanz von der Lichtbogenlänge nichtlinear ist, würde sich bei einer fest eingestellten Reglerverstärkung mit der Änderung der Lichtbogenlänge, beispielsweise aufgrund einer Änderung der Betriebsbedingungen, das dynamische Regelverhalten des Regelkreises ebenfalls ändern, was vermieden werden soll. Aus diesem Grund wird gegensinnig zur Änderurig der Regelstreckenverstärkung die Verstärkung des Reglers geändert, so daß die sich durch das Produkt der beiden Verstärkungen ergebende Gesamtverstärkung und damit das dynamische Regelverhalten gleichbleibt. Gemäß dem Ausführungsbeispiel wirkt die zur Einstellung der Reglerverstärkung dienende Korrekturstufe 16 auf die Soll-Istwertdifferenz. Dies ist jedoch nicht zwingend, weil beispielsweise die Reglerverstärkung auch durch eine entsprechende Beeinflussung des Istwertes der Impedanz oder aber auch der Stellgröße verändert werden kann.

Das der eigentlichen Reglerschaltung 20 zugeführte, korrigierte Eingangssignal bedingt am Reglerausgang eine Stellgröße, die auf den jeweiligen Arbeitspunkt abgestimmt ist und im Bereich dieses Arbeitspunktes eine schwingungsfreie Elektrodenregelung in Abhängigkeit von der Impedanz sicherstellt.

Damit Schwingungen im Bereich des Hubtriebes 5 unmittelbar ausgeregelt werden können, werden hydraulische Druckschwingungen im Bereich des Stellzylinders durch einen Geber 21 erfaßt, über den eine Störgrößenbeaufschlagung der Reglerschaltung 20 erfolgt, so daß den Druckschwingungen durch eine entsprechende Beeinflussung der Stellgröße zur Beaufschlagung des Steuerventiles 7 auf kurzem Wege gegengesteuert werden kann. Der Geber 21 für die hydraulischen Druckschwingungen weist eine Druckmeßeinrichtung 22 mit einem nachgeschalteten Differenzierglied 23 auf, so daß lediglich das Schwingungsverhalten erfaßt wird. Durch ein zugeordnetes Schwingungsfilter 24 kann eine bevorzugte Berücksichtigung der Druckschwingungen im Bereich der Eigenfrequenzen des schwingungsfähigen Systems aus Elektrode 2 und Tragarm 6 erreicht werden.

Die Erfindung ist selbstverständlich nicht auf das dargestellte Ausführungsbeispiel beschränkt. So könnte beispielsweise der Geber 17 für die Regelstreckenverstärkung eingangsseitig statt mit dem Istwertgeber 13 für die Impedanz mit der Sollwerteingabe 15 verbunden sein, so daß die Reglerverstärkung nur mit der gewollten Änderung des Arbeitspunktes über einen geänderten Sollwert verstellt wird. Diese Vorgangsweise ist durchaus möglich, wenn eine ordnungsgemäße Impedanzregelung vorausgesetzt wird, weil ja im Bereich eines Arbeitspunktes von linearisierten Verhältnissen ausgegangen werden darf.

## Patentansprüche

1. Regelkreis zur Impedanzregelung eines Lichtbogenofens (1) mit wenigstens einer Elektrode (2), einem über ein Steuerventil (7) beaufschlagbaren, hydraulischen Hubtrieb (5) für die Elektrode (2), einem an einem Stelltrieb (9) für das Steuerventil (7) angeschlossenen Regler (10), dem eingangsseitig ein Istwertgeber (13) für die Impedanz und eine Eingabe (15) für den Impedanz-Sollwert zugeordnet sind, und mit einer Korrekturstufe (16) für die Reglerverstärkung, dadurch gekennzeichnet, daß die Korrekturstufe (16) für die Reglerverstärkung über einen Geber (17) für die Regelstreckenverstärkung im Sinne einer zur Änderung der Streckenverstärkung gegensinnigen Änderung der Regelverstärkung betätigbar ist.

2. Regelkreis nach Anspruch 1, dadurch gekennzeichnet, daß der Regler (10) zur Störgrößenbeaufschlagung an einen Geber (21) für die hydraulischen Druckschwingungen im Hubtrieb (5) angeschlossen ist.

3. Regelkreis nach Anspruch 2, dadurch gekennzeichnet, daß dem Geber (21) für die hydraulischen Druckschwingungen ein auf die Eigenfrequenz der in einem Tragarm (6) gehaltenen Elektrode (2) abgestimmte Schwingungsfilter (24) zugeordnet ist.

## Claims

1. A control loop for impedance control of an arc furnace (1) having: at least one electrode (2); a hydraulic drive (5) for raising the electrode (2) and activatable by way of a control valve (7); a controller (10) which is connected to a final control element (9) for the control valve (7) and which is associated on the input side with an actual-value sensor (13) for the impedance and an input (15) for the impedance set-value; and a correcting stage (16) for controller amplification, characterised in that the correcting stage (16) for controller amplification can be activated by way of a sensor (17) for amplification of the control system in such manner as to vary controller amplification oppositely to control system amplification.

2. A control loop according to claim 1, characterised in that the controller (10) is connected for deviation activation to a sensor (21) for hydraulic pressure oscillations in the raising drive (5).

3. A control loop according to claim 2, characterised in that an oscillation filter (24) tuned to the natural frequency of the electrode (2), the same being disposed in a support arm (6), is associated with the sensor (21) for the hydraulic pressure oscillations.

## Revendications

1. Circuit de régulation, pour réglage d'impédance d'un four à arc électrique (1), comportant au moins une électrode (2), un entraînement de levage (5) hydraulique, susceptible d'être alimenté par l'intermédiaire d'une soupape de commande (7) et destiné à l'électrode (2), un régulateur (10), raccordé à un servo-entraînement (9) destiné à la soupape de commande (7) et auquel sont associés, côté entrée, un transducteur (13) de valeur réelle, appréhendant l'impédance, et un dispositif d'introduction (15), concernant la valeur de consigne de l'impédance, et avec un étage correcteur (16) destiné à l'amplification du régulateur, caractérisé en ce que l'étage correcteur (16) destiné à l'amplification du régulateur peut être actionné par l'intermédiaire d'un capteur (17) affecté à l'amplification de a boucle de régulation, opérant une modification de l'amplification de la régulation, en sens inverse de la variation de l'amplification de la boucle de régulation.

2. Circuit de régulation selon la revendication 1, caractérisé en ce que le régulateur (10) destiné à être exposé aux grandeurs parasites est raccordé à un capteur (21) appréhendant les fluctuations de la pression hydraulique dans l'entraînement de levage (5).

3. Circuit de régulation selon la revendication 2, caractérisé en ce qu'un filtre de vibrations (24), conçu pour la fréquence propre de l'électrode (2) maintenue dans un bras support (6), est associé au capteur (21) destiné à appréhender les fluctuations de la pression hydraulique.
